# EUROPÄISCHE PATENTSCHRIFT

(11) **EP 1 293 660 B1**
(45) Veröffentlichungstag und Bekanntmachung des Hinweises auf die Patenterteilung: **23.04.2008**
(21) Anmeldenummer: 02102207.4
(22) Anmeldetag: 22.08.2002
(51) Int. Cl.: F02D 41/38, F02D 41/04, F02D 41/10, F02D 41/26

(54) **Verfahren zur Steuerung der Einspritzmenge einer Brennkraftmaschine**
Method for controlling the injected fuel quantity in an internal combustion engine
Méthode de commande de la quantité de carburant injectée dans un moteur à combustion interne

(30) Priorität: 13.09.2001 DE 10145188
(43) Veröffentlichungstag der Anmeldung: 19.03.2003
(73) Patentinhaber: SIEMENS AKTIENGESELLSCHAFT, 80333 München (DE)
(72) Erfinder: Schneider, Dirk, 93055, Regensburg (DE)

(56) Entgegenhaltungen:
- EP-A- 1 088 978
- US-A- 5 357 912
- US-A- 6 092 504

## Beschreibung

Die Erfindung betrifft ein Verfahren zur Steuerung der Einspritzmenge bei einer Kraftstoff-Direkteinspritzung einer Brennkraftmaschine im geschichteten Betrieb.

Bei Ottomotoren mit Kraftstoff-Direkteinspritzung erfolgt die Momentensteuerung im geschichteten Betrieb über die eingespritzte Kraftstoffmenge. Bei schnellen Änderungen der Drehmomentanforderung, wie sie beispielsweise durch Fahrbarkeitsfunktionen auftreten, kann sich der Sollwert für die einzuspritzende Kraftstoffmenge von einem Arbeitsspiel zum nachfolgenden erheblich ändern. Motorbetriebsparameter, deren Wert abhängig von der aktuellen Einspritzmenge eingestellt werden, können nicht synchron mit der geänderten Kraftstoffmenge nachgeführt werden. Bei solchen Motorbetriebsparametern handelt es sich beispielsweise um eine Abgasrückführrate oder einen Frischgasstrom. Die Abweichung dieser Betriebsparameter von den arbeitsspielsynchronen Sollwerten wirken sich nachteilig auf den Brennverlauf aus und können zu einer verschleppten Verbrennung sowie zu Verbrennungsaussetzern führen.

US 5,357,912 offenbart eine Vorrichtung und ein Verfahren zum Steuern der Parameter einer Einspritzmenge, einer Einspritzzeit und eines betätigenden Hydraulikdrucks für ein hydraulisch betätigtes elektronisches Kraftstoffeinspritzsystem. In diesem Verfahren werden die folgenden Eingaben genutzt: gewünschte Motordrehzahl, gemessene Motordrehzahl, Lufteinlassdruck, betätigender Hydraulikdruck und Viskosität der betätigenden Flüssigkeit. Basierend auf einer gewünschten Motordrehzahl wird eine Abweichung zur bestehenden Motordrehzahl berechnet. Anhand der berechneten Abweichung wird nachfolgend die Kraftstoffmenge bestimmt, die zum Erreichen der gewünschten Motordrehzahl erforderlich wäre. Diese Kraftstoffmenge wird mit der erlaubten maximalen Kraftstoffmenge der Brennkraftmaschine verglichen und der kleinere Wert von beiden wird weitergegeben. Danach erfolgen weitere Berechnungs- und Vergleichsschritte.

Der Erfindung liegt die Aufgabe zugrunde, ein Verfahren zur Bestimmung der eingespritzten Kraftstoffmenge bereitzustellen, das auch bei einer schnellen Änderung der Drehmomentanforderung eine nachteilige Wirkung auf den Brennverlauf vermeidet, das Auftreten von Verbrennungsaussetzern ausschließt.

Die Aufgabe wird durch ein Verfahren mit den Merkmalen aus Anspruch 1 gelöst.

Bei dem erfindungsgemäßen Verfahren wird eine maximal und/oder eine minimal zulässige Einspritzmenge für eine Einspritzmengenbegrenzung bei einer Änderung der Drehmomentanforderung bestimmt. Die Werte für die maximal und minimal zulässige Einspritzmenge werden abhängig von einem oder mehreren Betriebsparametern bestimmt, deren Werte sich nicht synchron mit dem Arbeitsspiel ändern, d.h. sich bezogen auf das Arbeitsspiel langsam ändern. In einem nachfolgenden Schritt wird ein Sollwert für die Einspritzmenge, der größer oder kleiner ist als der maximal bzw. minimal zulässige Wert ist auf den Wert für die maximal bzw. minimal zulässige Einspritzmenge begrenzt. Der besondere Vorteil dieser Vorgehensweise liegt darin, dass im Gegensatz zur bisherigen Steuerung die einzuspritzende Kraftstoffmenge im Schichtbetrieb erfindungsgemäß auf einen Wert begrenzt wird, welcher unter den gegebenen Randbedingungen, beispielsweise bei einem hochdynamischen Eingriff der Fahrbarkeitsfunktionen, eine ausreichende Verbrennung ohne Verschleppung oder Verbrennungsaussetzer sicherstellt.

Die Werte für eine Einspritzmengenbegrenzung werden abhängig von einem oder mehreren der nachfolgenden Betriebsparameter bestimmt: Frischgasstrom, Abgasrückführrate, Kraftstoffdruck und Stellung der Ladungsbewegungsklappe. Bei einer Änderung des angeforderten Drehmoments, können die zuvor genannten Betriebsparameter ihre Werte nicht segmentsynchron einstellen, also nicht innerhalb eines oder weniger Arbeitsspiele.

Der Ist-Wert für jeden der Betriebsparameter gemeinsam mit der Drehzahl dient zur Bestimmung einer minimal und einer maximal zulässigen Einspritzmenge. Bei dieser Ausgestaltung des erfindungsgemäßen Verfahrens wird vorzugsweise für jeden Betriebsparameter separat der minimal zulässige und der maximal zulässige Wert für die Einspritzmenge bestimmt. Die Bestimmung erfolgt jeweils über ein Kennfeld, das abhängig vom Ist-Wert und der Drehzahl je nach Art des Kennfeldes einen Maximal- oder Minimalwert enthält.

Bei einer bevorzugten Weiterführung des erfindungsgemäßen Verfahrens wird als maximal zulässige Einspritzmenge der kleinste Werte der jeweils für die einzelnen Betriebsparameter bestimmten maximal zulässigen Einspritzmengen bestimmt. Für die minimal zulässige Einspritzmenge wird der größte Wert der jeweils für die einzelnen Betriebsparameter ermittelten minimal zulässigen Einspritzmengen bestimmt. Bei dieser Vorgehensweise wird als Intervall der zulässigen Einspritzmenge ein Intervall bestimmt, das innerhalb der Intervallgrenzen der einzelnen Betriebsparameter liegt.

In einer alternativen Weiterführung des erfindungsgemäßen Verfahrens wird aus mehreren Betriebsparametern eine charakteristische Größe bestimmt, die jeweils zusammen mit der Drehzahl die maximal und die minimal zulässigen Einspritzmenge festlegt. In einer auf den Ist-Werten basierenden Bestimmung der charakteristischen Größe wird abhängig von den Ist-Werten von jedem der Betriebsparameter und von der Drehzahl eine Hilfsgröße bestimmt, deren Mittelwert die charakteristische Größe ergibt. Die Hilfsgrößen werden dabei vorzugsweise über Kennfelder für jeden der Betriebsparameter separat bestimmt.

In einer ebenfalls vorteilhaften Ausgestaltung des erfindungsgemäßen Verfahrens wird eine segmentsychrone Führungsgröße zur Laststeuerung an eine oder mehrere Glättungseinrichtungen, insbesondere an Tiefpassfilter, angelegt, deren Kennwerte auf ein langsames Verhalten der Betriebsparameter abgestimmt ist. Bei der Führungsgröße handelt es sich bevorzugt um eine Drehmomentanforderung. Die geglättete bzw. gefilterte Führungsgröße dient als eine charakteristische Größe, die jeweils zusammen mit der Drehzahl die maximal und minimal zulässige Einspritzmenge bestimmt.

Bei einer bevorzugten Weiterführung des erfindungsgemäßen Verfahrens kann die geglättete Führungsgröße gemeinsam mit der Drehzahl zur Bestimmung von Soll-Werten für einzelne Betriebsparameter eingesetzt werden.

Die Soll-Werte werden dabei bevorzugt über Kennfelder bestimmt.

Das erfindungsgemäße Verfahren wird anhand der nachfolgenden Figuren näher erläutert. Es zeigt:
- Fig. 1: ein Blockschaltbild für die Bestimmung der Kraftstoffeinspritzmenge abhängig von Betriebsparametern mit deren Ist-Werten,
- Fig. 2: eine Bestimmung der Kraftstoffeinspritzmenge abhängig von einer charakteristischen Größe,
- Fig. 3: ein Blockschaltbild zur Bestimmung der charakteristischen Größe abhängig von Ist-Werten der Betriebsparameter und
- Fig. 4: ein Blockschaltbild zur Bestimmung der charakteristischen Größe abhängig von der aktuellen Drehmomentanforderung.

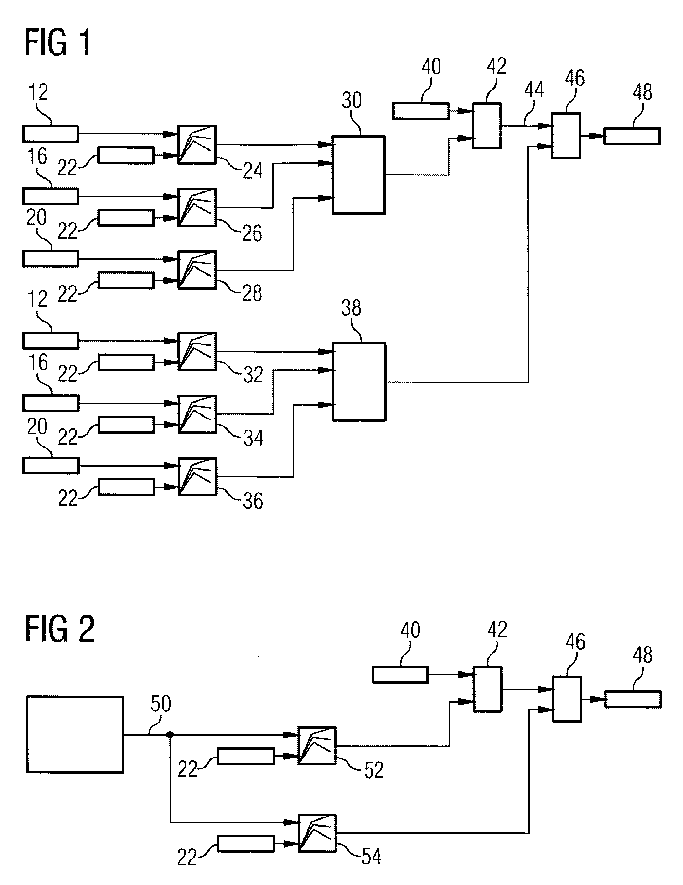

In Fig. 1 ist jeweils der Ist-Wert eines Betriebsparameters als eine Eingangsgröße vorgesehen. Als Betriebsparameter können Größen angesehen werden, deren Ist-Werte sich vergleichsweise langsam während einer Übergangsphase ändern. Solche Betriebsparameter sind beispielsweise der Frischgasstrom mit seinem Ist-Wert 12, die Abgasrückführrate mit ihrem Ist-Wert 16, ein Kraftstoffdruck (nicht dargestellt) und die Stellung der Ladungsbewegungsklappe mit ihrem Ist-Wert 20. Der Ist-Wert der Betriebsparameter liegt zusammen mit der Drehzahl 22 jeweils an einem Kennfeld 24 bis 28 an. Die Kennfelder bestimmen abhängig von den Ist-Werten der Betriebsparameter und von der Drehzahl jeweils eine minimal zulässige Einspritzmenge. Die Werte der minimal zulässigen Einspritzmenge werden in einem Vergleichselement 30 miteinander verglichen. Am Ausgang des Vergleichselements 30 liegt der größte Minimalwert an. In einem zweiten Ast des Blockschaltbildes aus Fig. 1 wird abhängig von dem Ist-Wert für die oben genannten vier Betriebsparameter über Kennfelder 32 bis 36 jeweils abhängig der Drehzahl 22 eine maximal zulässige Einspritzmenge bestimmt. Die Vergleichseinrichtung 38 bestimmt aus den maximal zulässigen Werten den Minimalwert.

Ein von der Motorsteuerung vorgegebener Soll-Wert für die Einspritzmenge 40 wird mit dem ermittelten minimal zulässigen Einspritzwert in einem Komparator 42 verglichen. Der größere von beiden Werten liegt als Wert 44 zusammen mit der durch die Vergleichseinheit 38 bestimmten maximalen Einspritzmenge an dem Komparator 46 an. Der kleinere von beiden Werten wird als Soll-Wert für die Einspritzmenge 48 an die Motorsteuerung weitergeleitet. Die Komparatoren 42 und 46 stellen sicher, dass der ausgegebene Soll-Wert für die Einspritzmenge im Intervall der ermittelten zulässigen Einspritzmenge liegt.

Fig. 2 zeigt eine alternative Variante, bei der eine aus Betriebsparametern bestimmte charakteristische Größe 50 gemeinsam mit der Drehzahl 22 jeweils über ein Kennfeld 52 bzw. 54 die untere bzw. obere Grenze für die Einspritzmengenlimitierung ermittelt wird. Ein Soll-Wert 40 für die Einspritzmenge wird über die Hintereinanderschaltung der Komparatoren 42 und 46 in einen Soll-Wert für die Einspritzmenge umgerechnet. Der umgerechnete Soll-Wert liegt innerhalb des zulässigen Einspritzintervalls.

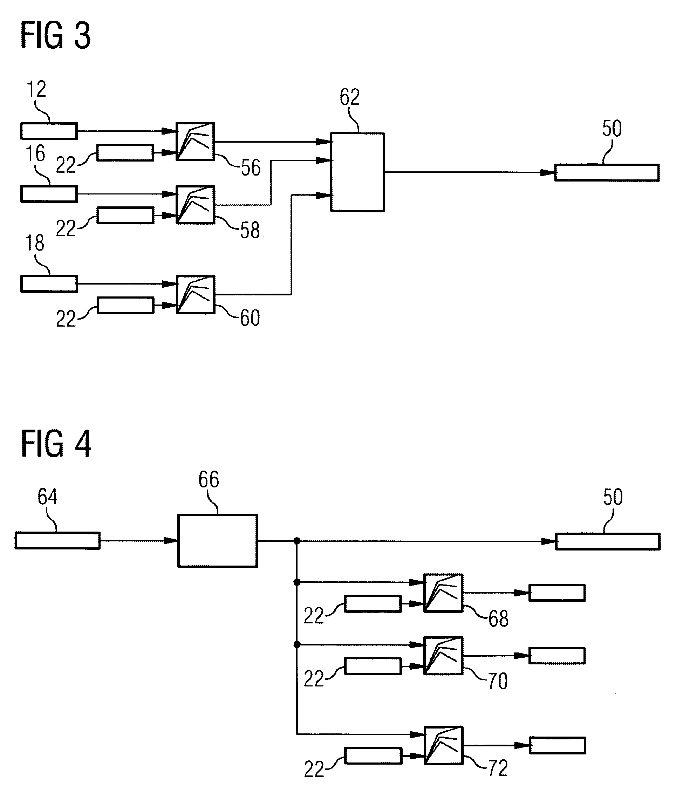

Zur Bestimmung der charakteristischen Größe 50 kann ein Verfahren gemäß dem Blockschaltbild aus Fig. 3 eingesetzt werden. Bei diesem Verfahren wird ausgehend von den Ist-Werten der Betriebsparameter 12, 16 und 18 sowie eines nicht dargestellten vierten Betriebsparameters zusammen mit der Drehzahl 22 Hilfsgrößen ermittelt. Jede der Hilfsgrößen wird über Kennfelder 56 bis 60 jeweils für einen Betriebsparameter ermittelt. In 42 wird mit einer Einrichtung zur Bildung eines Mittelwertes (62) aus den Hilfsgrößen eine charakteristische Größe 50 bestimmt. Diese kann als Eingangsgröße für das in Fig. 2 dargestellte Verfahren eingesetzt werden.

In einem alternativen Verfahren zur Bestimmung der charakteristischen Größe 50 wird eine primäre Führungsgröße 64 verwendet, hierbei kann es sich beispielsweise um die aktuelle Drehmomentanforderung mit segmentsynchronen Werten handeln. Die primäre Führungsgröße dient zur Laststeuerung der Brennkraftmaschine. Deren Wert wird in einer Glättungseinrichtung 66 zur charakteristischen Größe 50 geglättet. Bei der Glättungseinrichtung 66 handelt es sich beispielsweise um Tiefpassfilter mit Kennwerten, die auf das Übertragungsverhalten der langsamen Stellglieder abgestimmt sind, damit die Abweichung zwischen Ist-Wert und Soll-Wert für den Betriebsparameter minimal ist. Bei der in Fig. 4 dargestellten Variante dient die charakteristische Größe 50 zusätzlich dazu, zusammen mit der Drehzahl 22 über Betriebsparameter spezifische Kennfelder 68 bis 72 jeweils Soll-Werte für Betriebsparameter zu bestimmen.

Bei den beispielhaft dargestellten Ausführungsbeispielen wurden sämtliche Betriebsparameter als gleichwertig beschrieben. Es ist jedoch auch möglich, das erfindungsgemäße Verfahren mit nur einem oder einer Kombination der Betriebsparameter durchzuführen. Hierbei ist es ebenfalls möglich, die Anteile einzelner Betriebsparameter unterschiedlich zu gewichten.

## Patentansprüche

1. Verfahren zur Steuerung der Einspritzmenge bei einer Kraftstoff-Direkteinspritzung einer Brennkraftmaschine im geschichteten Betrieb, mit folgenden Verfahrensschritten:
- eine maximal und minimal zulässige Einspritzmenge (30, 38; 52, 54) wird bei einer Änderung der Drehmomentanforderung bestimmt,
- die Werte für maximal und minimal zulässige Einspritzmengen werden abhängig von einem oder mehreren der folgenden Betriebsparameter
- Frischgasstrom,
- Abgasrückführrate,
- Kraftstoffdruck und
- Stellung der Ladungsbewegungsklappe bestimmt und
- ein Soll-Wert (48) für die Einspritzmenge wird begrenzt, wobei der Soll-Wert unterhalb der minimal zulässigen Einspritzmenge auf diese und der Soll-Wert oberhalb der maximal zulässigen Einspritzmenge auf diese begrenzt wird.

2. Verfahren nach Anspruch 1, **dadurch gekennzeichnet, dass** aus dem Ist-Wert der Betriebsparameter und aus der Drehzahl ein minimal zulässiger Wert und ein maximal zulässiger Wert für die Einspritzmenge bestimmt wird.

3. Verfahren nach Anspruch 2, **dadurch gekennzeichnet, dass** der minimal zulässige Wert und der maximal zulässige Wert für die Einspritzmenge jeweils für einen Betriebsparameter bestimmt werden.

4. Verfahren nach Anspruch 3, **dadurch gekennzeichnet, dass** die Bestimmung über ein Kennfeld erfolgt.

5. Verfahren nach Anspruch 3 oder 4, **dadurch gekennzeichnet, dass** als maximal zulässige Einspritzmenge der kleinste Wert der jeweils für die einzelnen Betriebsparameter ermittelten maximalen Einspritzmengen bestimmt wird.

6. Verfahren nach einem der Ansprüche 3 bis 5, **dadurch gekennzeichnet, dass** als minimal zulässige Einspritzmenge der größte Wert der jeweils für die einzelnen Betriebsparameter ermittelten minimalen Einspritzmenge bestimmt wird.

7. Verfahren nach Anspruch 1, **dadurch gekennzeichnet, dass** aus mehreren Betriebsparametern eine charakteristische Größe bestimmt wird, aus der jeweils zusammen mit der Drehzahl die maximal und die minimal zulässige Einspritzmenge bestimmt wird.

8. Verfahren nach Anspruch 7, **dadurch gekennzeichnet, dass** aus dem Ist-Wert eines oder mehrerer der Betriebsparameter und der Drehzahl eine Hilfsgröße bestimmt wird, deren Mittelwert als charakteristische Größe dient.

9. Verfahren nach Anspruch 8, **dadurch gekennzeichnet, dass** die Hilfsgröße für jede der Betriebsparameter jeweils über ein Kennfeld bestimmt wird.

10. Verfahren nach Anspruch 1, **dadurch gekennzeichnet, dass** eine segmentsynchrone Führungsgröße für die Laststeuerung an einer oder mehreren Glättungseinrichtungen, insbesondere Tiefpassfiltern anliegt, deren Kennwerte auf ein langsames Verhalten der Betriebsparameter abgestimmt sind.

11. Verfahren nach Anspruch 10, **dadurch gekennzeichnet, dass** als Führungsgröße eine Drehmomentanforderung vorgesehen ist.

12. Verfahren nach Anspruch 10 oder 11, **dadurch gekennzeichnet, dass** die geglättete Führungsgröße als charakteristische Größe verwendet wird, die zusammen mit der Drehzahl die maximal und die minimal zulässige Einspritzmenge bestimmt.

13. Verfahren nach einem der Ansprüche 10 bis 12, **dadurch gekennzeichnet, dass** die geglättete Führungsgröße gemeinsam mit der Drehzahl zur Bestimmung von Soll-Werten für Betriebsparameter dient.

14. Verfahren nach Anspruch 13, **dadurch gekennzeichnet, dass** die Soll-Werte der Betriebsparameter über jeweils ein Kennfeld bestimmt werden.

## Claims

1. Method for controlling the injection quantity in a direct fuel injection system of an internal combustion engine in stratified operation, with the following method steps:
- a maximum and minimum permissible injection quantity (30, 38; 52, 54) is determined when the torque requirement changes,
- the values for maximum and minimum permissible injection quantity are determined as a function of one or more of the following operating parameters
- fresh gas flow,
- exhaust gas recirculation rate,
- fuel pressure and
- position of charge movement flap
and
- a setpoint value (48) for the injection quantity is limited, with the setpoint value below the minimum permissible injection quantity being limited to this and the setpoint value above the maximum permissible injection quantity being limited to this.

2. Method according to claim 1, **characterised in that** a minimum permissible value and a maximum permissible value for the injection quantity are determined from the actual values of the operating parameters and the engine speed.

3. Method according to claim 2, **characterised in that** the minimum permissible value and the maximum permissible value for the injection quantity are determined for one operating parameter respectively.

4. Method according to claim 3, **characterised in that** determination takes place by way of a set of characteristics.

5. Method according to claim 3 or 4, **characterised in that** the lowest value of the maximum injection quantities determined respectively for the individual operating parameters is determined as the maximum permissible injection quantity.

6. Method according to one of claims 3 to 5, **characterised in that** the highest value of the minimum injection quantities determined respectively for the individual operating parameters is determined as the minimum permissible injection quantity.

7. Method according to claim 1, **characterised in that** a characteristic variable is determined from a number of operating parameters, from which variable, together with the engine speed, the maximum and minimum permissible injection quantities are determined.

8. Method according to claim 7, **characterised in that** an auxiliary variable is determined from the actual value of one or more of the operating parameters and the engine speed, the mean value of said auxiliary variable serving as a characteristic variable.

9. Method according to claim 8, **characterised in that** the auxiliary variable is determined for each of the operating parameters respectively by way of a set of characteristics.

10. Method according to claim 1, **characterised in that** a segment-synchronous reference variable for load control is present at one or more smoothing apparatuses, in particular low-pass filters, whose characteristic values are tailored to a slow response of the operating parameters.

11. Method according to claim 10, **characterised in that** a torque requirement is provided as the reference variable.

12. Method according to claim 10 or 11, **characterised in that** the smoothed reference variable is used as the characteristic variable, which, together with the engine speed, determines the maximum and minimum permissible injection quantities.

13. Method according to one of claims 10 to 12, **characterised in that** the smoothed reference variable is used together with the engine speed to determined setpoint values for operating parameters.

14. Method according to claim 13, **characterised in that** the setpoint values of the operating parameters are determined by way of a set of characteristics respectively.

## Revendications

1. Procédé de commande de la quantité d'injection dans le cas d'une injection directe de carburant d'un moteur, en fonctionnement stratifié, comportant les étapes de procédé suivantes:
- une quantité d'injection permise maximale et minimale (30, 38; 52, 54) est déterminée pour une modification de la demande de couple de rotation,
- les valeurs pour des quantités d'injection permises maximales et minimales sont déterminées en fonction d'un ou plusieurs des paramètres de fonctionnement suivants:
- courant de gaz frais,
- débit de recyclage de gaz d'échappement,
- pression de carburant, et
- position du papillon de mouvement de la charge,
et
- une valeur de consigne (48) pour la quantité d'injection est limitée, la valeur de consigne au-dessous de la quantité d'injection minimale permise étant limitée à celle-ci et la valeur de consigne au-dessus de la quantité d'injection maximale permise étant limitée à celle-ci.

2. Procédé suivant la revendication 1, **caractérisé en ce qu'**à partir de la valeur réelle du paramètre de fonctionnement et à partir du couple de rotation, sont déterminées une valeur minimale permise et une valeur maximale permise pour la quantité d'injection.

3. Procédé suivant la revendication 2, **caractérisé en ce que** la valeur minimale permise et la valeur maximale permise pour la quantité d'injection sont chaque fois déterminées pour un paramètre de fonctionnement.

4. Procédé suivant la revendication 3, **caractérisé en ce que** la détermination se fait au moyen d'un champ de données.

5. Procédé suivant la revendication 3 ou 4, **caractérisé en ce que**, comme quantité d'injection maximale permise, est déterminée la plus petite valeur des quantités d'injection maximales obtenues chaque fois pour les différent paramètres de fonctionnement.

6. Procédé suivant l'une des revendications 3 à 5, **caractérisé en ce que**, comme quantité d'injection minimale permise, est déterminée la valeur la plus grande des quantités d'injection minimales obtenues chaque fois pour les différent paramètres de fonctionnement.

7. Procédé suivant la revendication 1, **caractérisé en ce qu'**à partir de plusieurs paramètres de fonctionnement, est déterminée une grandeur caractéristique, à partir de laquelle sont chaque fois déterminées, en commun avec la vitesse de rotation, la quantité d'injection maximale permise ou la quantité d'injection minimale permise.

8. Procédé suivant la revendication 7, **caractérisé en ce qu'**à partir de la valeur réelle d'un ou de plusieurs des paramètres de fonctionnement et à partir de la vitesse de rotation, est déterminée une grandeur auxiliaire, dont la valeur moyenne sert de grandeur caractéristique.

9. Procédé suivant la revendication 8, **caractérisé en ce que** la grandeur auxiliaire est déterminée, pour chacun des paramètres de fonctionnement, au moyen d'un champ de données.

10. Procédé suivant la revendication 1, **caractérisé en ce qu'**une grandeur de guidage synchrone par segment pour la commande de la charge est associée à un ou plusieurs dispositifs de lissage, en particulier des filtres passe-bas, dont les valeurs caractéristiques ont été déterminées sur un comportement à action lente des paramètres de fonctionnement.

11. Procédé suivant la revendication 10, **caractérisé en ce que**, comme grandeur de guidage, il est prévu une demande de couple de rotation.

12. Procédé suivant la revendication 10 ou 11, **caractérisé en ce que** la grandeur de guidage lissée est utilisée comme grandeur caractéristique qui détermine, en commun avec la vitesse de rotation, la quantité d'injection maximale permise et la quantité d'injection minimale permise.

13. Procédé suivant une des revendications 10 à 12, **caractérisé en ce que** la grandeur de guidage lissée sert, en commun avec la vitesse de rotation, à la détermination de valeurs de consigne pour les paramètres de fonctionnement.

14. Procédé suivant la revendication 13, **caractérisé en ce que** les valeurs de consigne des paramètres de fonctionnement sont déterminées au moyen de chaque fois un champ de données.
